# EUROPÄISCHE PATENTSCHRIFT

(11) **EP 0 734 929 B1**
(45) Veröffentlichungstag und Bekanntmachung des Hinweises auf die Patenterteilung: **01.09.1999**
(21) Anmeldenummer: 96103965.8
(22) Anmeldetag: 13.03.1996
(51) Int. Cl.: B60T 13/66

(54) **Elektrohydraulische Bremsanlage**
Electro-hydraulic brake system
Système de freinage électrohydraulique

(30) Priorität: 31.03.1995 DE 19512254
(43) Veröffentlichungstag der Anmeldung: 02.10.1996
(73) Patentinhaber: LUCAS INDUSTRIES PUBLIC LIMITED COMPANY, Solihull, West Midlands B91 3TX (GB)
(72) Erfinder: Poertzgen, Gregor, 56068 Koblenz (DE); Mohr, Kurt, 56283 Halsenbach/Ehr (DE); Dieringer, Werner, 56179 Vallendar (DE); Heibel, Helmut, 56424 Moschheim (DE); Wagner, Thomas, 56179 Vallendar (DE)
(74) Vertreter: Schmidt, Steffen J., Dipl.-Ing.

(56) Entgegenhaltungen:
- EP-A- 0 268 045
- EP-A- 0 369 412
- EP-A- 0 425 261
- WO-A-96/11129
- DE-A- 4 102 719

## Beschreibung

Die Erfindung betrifft eine elektrohydraulische Bremsanlage für Kraftfahrzeuge mit einem durch ein Bremspedal betätigbaren Bremszylinder und einem drucklosen Reservoir für Hydraulikfluid, einer mit einem Fahrzeugrad gekoppelten Bremseinrichtung, die mit dem Bremszylinder in Verbindung bringbar ist, um die Bremseinrichtung mit unter Druck stehendem Hydraulikfluid zu beaufschlagen, einer unter Druck stehendes Hydraulikfluid liefernden Quelle, die mit der Bremseinrichtung in Verbindung bringbar ist, um die Bremseinrichtung mit unter Druck stehendem Hydraulikfluid zu beaufschlagen, und einer elektronischen Steuereinrichtung, die mit einem Sensor zur Erfassung von an dem Bremspedal auftretenden statischen und dynamischen Zuständen verbunden ist und von dem Sensor abgegebene Signale zur Erzeugung von Steuersignalen für eine Steuerventilanordnung heranzieht.

Bei einer solchen elektrohydraulischen Bremsanlage wird die zur Abbremsung des Kraftfahrzeugs erforderliche Bremsenergie durch ein elektrisch betätigtes Bremssystem bereitgestellt. Um das Fahrzeug bei einem unerwarteten Ausfall des elektrisch betätigten Bremssystems mit einer Mindestverzögerung abzubremsen, weist die Bremsanlage zusätzlich ein hydraulisches Hilfsbremssystem zur unmittelbaren Betätigung der Bremsen auf.

Das Anwendungsgebiet einer solchen elektrohydraulischen Bremsanlage umfaßt Antiblockierregelung, Antischlupfregelung, elektronische Bremskraftverteilung sowie fahrdynamische Regelungen.

Da bei einer elektrisch betätigten Bremsanlage der Fahrerwunsch am Bremspedal mit Sensoren erfaßt und in Form von elektrischen Signalen der elektronischen Steuerung zugeführt wird, werden derartige Systeme auch als "Brake-by-Wire" bezeichnet. Für das redundante hydraulische Notsystem ist in herkömmlicher Weise über einen Bremsdruckgeber sowie Hydraulikleitungen eine direkte Verbindung zwischen Bremspedal und den Bremsen herzustellen, was auch die Bezeichnung "Push-Through" trägt. Dies erfordert eine Umschalteinrichtung, so daß bei normalem Betrieb der in dem elektrischen System erzeugte Bremsdruck, und bei Vorliegen eines Fehlers oder Ausfall des elektrischen Systems der in dem hydraulischen Hilfssystem erzeugte Bremsdruck an die Bremsen übertragen wird.

Aus der DE 42 29 041 A1 ist ein Bremssteuersystem für ein Fahrzeug bekannt, bei dem zusätzlich zu einem elektrischen Bremssystem ein mechanisches Bremssystem vorgesehen ist, das automatisch betätigt wird, wenn ein unerwarteter elektrischer Fehler in dem elektrischen Bremssystem aufgetreten ist. Dazu wird ein elektromagnetisch betätigtes Drei-Zwei-Wege-Ventil derart umgeschaltet, daß die Bremsen entweder nur mit dem mechanischen Bremssystem oder nur mit dem elektrischen Bremssystem verbunden sind. Dabei ist die Umschalteinrichtung so ausgelegt, daß die Verbindung mit dem mechanischen Bremssystem in der Grundposition, also bei elektrisch nicht betätigtem Magnetventil, eingestellt wird.

Ein nach diesem Konzept ausgerüstetes "Push-Through"-fähiges elektrohydraulisches Bremssystem ist auch aus der US 721,019 bekannt.

Aus der WO 96/11129 ist ein hydraulisches Bremssystem bekannt, bei dem während eines normalen Bremsbetriebs der Ausgang eines Hauptbremszylinders unterbrochen ist und die Bremsen von einer Hochdruckhydraulikquelle betätigt werden. Dabei werden die Bewegungen des Bremspedals sensiert und mittels eines Steuergerätes Magnetventile betätigt. Bei einem Ausfall der elektronischen Steuerung wird zwischen dem Hauptbremszylinder und den Bremsen eine direkte hydraulische Verbindung hergestellt, über die die Bremsen manuell betätigt werden können ("Push-Trough"-Mode). Dabei kann mittels verschiedener Magnetventile eine direkte Verbindung zwischen dem Hauptbremszylinder und den Bremsen geöffnet bzw. gesperrt werden. Für den Betrieb des elektrischen Bremssystems können die Ventile die Hochdruckquelle mit jeder Bremse verbinden, jede Bremse von anderen Leitungen trennen oder eine Verbindung zwischen jeder Bremse und einem Vorratsbehälter bereitstellen.

Als Nachteil bei diesen bekannten Systemen erweist sich, daß die Umschalteinrichtung zwischen der Radbremse und der elektrohydraulischen Einheit angeordnet ist. Dies hat zur Folge, daß bei einer infolge von Undichtigkeiten und/oder elektrischen Störungen defekten Umschalteinrichtung die ordnungsgemäße Funktion des Bremssystems nicht gewährleistet ist und im Extremfall sogar zum Totalausfall des "Push-Through" führen kann.

Zur Verringerung dieses Risikos besteht zwar die Möglichkeit die Umschalteinrichtungen redundant für jedes über den "Push-Through" abzubremsende Fahrzeugrad auszuführen. Dies wirkt sich jedoch nachteilig auf die Kosten und den Bedarf an Einbauraum aus, da zwei Umschalteinrichtungen benötigt werden, um durch den "Push-Through" zumindest die Bremsen der vorderen und/oder angetriebenen Fahrzeugachse zu betätigen. Wenn alle Fahrzeugräder über den "Push-Through" abzubremsen sind, treten diese Nachteile besonders deutlich zutage.

Falls aus Gründen der Einsparung elektrischer Energie die Umschalteinrichtung zur Deaktivierung des "Push-Through" immer nur bei Beginn eines elektrischen Bremsvorganges betätigt wird, besteht aufgrund der Anordnung der Umschaltrichtung zwischen Radbremse und elektrohydraulischer Einheit der Nachteil, daß Umschaltzeiten zu einem zeitlich verzögerten Druckaufbau an der Radbremse führen, was sich negativ auf die Leistungsfähigkeit des Systems auswirkt.

Der Erfindung liegt daher die Aufgabe zugrunde unter Vermeidung der vorgenannten Nachteile eine "Push-Through"-fähige elektrohydraulische Bremsanlage zu entwickeln, die hohen Sicherheitsanforderungen gerecht wird und mit einem verhältnismäßig geringen Kostenaufwand herstellbar ist.

Zur Lösung dieser Aufgabe ist die eingangs genannte Bremsanlage durch die Merkmale des kennzeichnenden Teils des Anspruchs 1 gekennzeichnet. Bei einer bevorzugten Ausführungsform der Erfindung ist die Steuerventilanordnung durch ein elektrisch betätigbares Ventil mit vier Anschlüssen und vier Ventilstellungen gebildet, wobei eine der vier Ventilstellungen eine unbetätigte Stellung ist und das Ventil in die drei anderen Stellungen durch Steuersignale von der elektronischen Steuereinrichtung bringbar ist.

Insbesondere sind dabei ein erster Anschluß des Ventils mit der Bremseinrichtung ein zweiter Anschluß des Ventils mit dem Bremszylinder, ein dritter Anschluß des Ventils mit dem drucklosen Reservoir für Hydraulikfluid, und ein vierter Anschluß des Ventils mit der unter Druck stehendes Hydraulikfluid liefernden Quelle verbunden.

Zur Einsparung eines Sensors in der Bremseinrichtung zur Erfassung des dort herrschenden Hydraulikdrucks weist bei dieser Ausführungsform das Ventil einen Drucksteuereingang auf, der mit dem ersten Anschluß des Ventils verbunden ist, um das Ventil in seine unbetätigte Stellung zu bringen. Diese Verschiebung des Ventilgliedes gegen die Kraft des Betätigungselektromagneten des Ventils führt zu einer Erhöhung des Stroms, der durch die Elektromagnetspule fließt. Diese Stromerhöhung kann gemessen und in der elektronischen Steuereinrichtung gemessen werden.

Um auch bei defekter Ansteuerung oder Rückstellung des Ventils sicherstellen zu können, daß eine Betätigung der Bremseinrichtung über den Bremszylinder jederzeit möglich ist, weist das Ventil einen Drucksteuereingang auf, der mit dem zweiten Anschluß des Ventils verbunden ist, um das Ventil in seine unbetätigte Stellung zu bringen.

Gemäß zwei weiteren elektrohydraulischen Bremsanlagen für Kraftfahrzeuge ist die Steuerventilanordnung durch ein erstes elektrisch betätigbares Ventil mit drei Anschlüssen und drei Ventilstellungen, sowie ein zweites elektrisch betätigbares Ventil mit drei Anschlüssen und zwei Ventilstellungen gebildet ist, wobei jeweils eine Ventilstellung des ersten Ventils und eine Stellung des zweiten Ventils eine unbetätigte Stellung sind, und das erste und das zweite Ventil in die jeweils anderen Stellungen durch Steuersignale von der elektronischen Steuereinrichtung bringbar sind.

Dabei sind bei einer zweiten Ausbildung ein erster Anschluß des zweiten Ventils mit der Bremseinrichtung, ein zweiter Anschluß des zweiten Ventils mit einem ersten Anschluß des ersten Ventils, ein dritter Anschluß des zweiten Ventils mit dem Bremszylinder, ein zweiter Anschluß des ersten Ventils mit dem drucklosen Reservoir für Hydraulikfluid, und ein dritter Anschluß des ersten Ventils mit der unter Druck stehendes Hydraulikfluid liefernden Quelle verbunden.

Bei einer dritten Ausbildung sind ein erster Anschluß des ersten Ventils mit der Bremseinrichtung, ein zweiter Anschluß des ersten Ventils mit einem ersten Anschluß des zweiten Ventils und mit dem Bremszylinder, ein dritter Anschluß des ersten Ventils mit der unter Druck stehendes Hydraulikfluid liefernden Quelle, und ein zweiter Anschluß des zweiten Ventils mit dem drucklosen Reservoir für Hydraulikfluid verbunden sind.

Auch hier können Drucksteuereingänge an dem ersten Ventil für die Feststellung des Drucks in der Bremseinrichtung oder zur Erhöhung der Sicherheit vorgesehen sein.

Die Erfindung und deren Vorteile wird im folgenden anhand der beigefügten Zeichnungen näher erläutert. Es zeigen:
- Fig. 1: ein elektrohydraulisches Bremssystem ohne "Push-Through",
- Fig. 2: eine "Push-Through"-fähige elektrohydraulische Bremsanlage,
- Fig. 3: eine Ausführungsform einer erfindungsgemäßen elektrohydraulischen Bremsanlage mit "Push-Through", und
- Fig. 4: eine elektrohydraulische Bremsanlage mit "Push-Through".

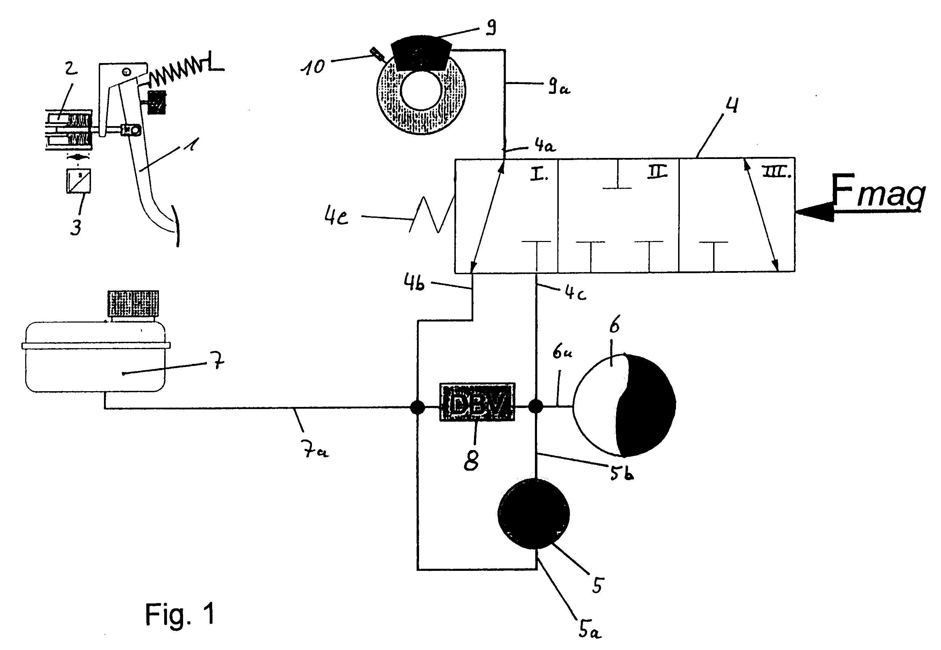

Das elektrohydraulische Bremssystem gemäß Fig. 1 weist ein Bremspedal 1 sowie einen damit verbundenen Wegsimulator 2 auf, der einen Sensor 3 zur Erfassung des Fahrerwunsches hat, der beispielsweise ein aus der Betätigung abgeleitetes elektrisches Weg- und/oder Kraftsignal abgibt. Der Fahrerwunsch wird zu einer hier nicht dargestellten elektronischen Steuereinheit übertragen, dort ausgewertet und zur Erzeugung elektrischer Steuersignale zur Ansteuerung eines Ventils 4 und einer Hydraulikpumpe 5 herangezogen.

Der zum Bremsen erforderliche Bremsdruck wird durch eine Einheit bestehend aus der vorzugsweise elektromotorisch angetriebenen Pumpe 5 und einem Druckspeicher 6 bereitgestellt. Dazu ist die Eingangsseite 5a der Pumpe 5 über eine Leitung 7a mit einem Reservoir 7 verbunden, um Hydraulikfluid anzusaugen, während die Ausgangsseite 5b der Pumpe 5 eine direkte Verbindung mit dem Anschluß 6a des Druckspeichers 6 aufweist. Zum Schutz des Systems ist zwischen der Eingangsseite 5a und der Ausgangsseite 5b der Pumpe 5 ein Druckbegrenzungsventil 8 angeordnet, welches den Druck im Speicher 6 auf einen vorgegebenen Grenzwert limitiert. Damit der Druck im Speicher 6 gehalten wird, ist die Pumpe 5 druckhaltend ausgeführt, was in geeigneter Weise durch Rückschlagventile oder einen selbsthemmenden Antrieb erreicht wird.

Als Stellglied dient ein elektromagnetisch betätigtes Proportionalventil 4, welches Anschlüsse 4a, 4b und 4c aufweist. Der Anschluß 4a ist über die Leitung 9a mit einer Radbremse 9, der Anschluß 4b über die Leitung 7a mit dem Reservoir 7 und der Anschluß 4c mit dem Ausgang 6a des Druckspeichers 6 verbunden. In unbetätigtem, also stromlosen Zustand verharrt das Proportionalventil 4 unter Krafteinwirkung einer Feder 4e in seiner Grundstellung I. und wird bei Betätigung gemäß der aus der Bestromung resultierenden Magnetkraft F_{mag}, die der Kraft der Feder 4d entgegengerichtet ist, in die Schaltstellungen II. und III. überführt.

In der ersten Schaltstellung I. stehen die Anschlüsse 4a und 4b direkt miteinander in Verbindung, während der Anschluß 4c gesperrt ist. Dadurch ist die Radbremse 9 direkt mit dem Reservoir 7 verbunden, so daß ein an der Radbremse 9 anstehender Bremsdruck vollständig abgebaut wird. Befindet sich das Ventil 4 in der zweiten Schaltstellung II., so sind die Anschlüsse 4a, 4b und 4c jeweils gesperrt, wodurch ein an der Radbremse 9 anstehender Bremsdruck gehalten wird. Wenn sich das Ventil 4 in der Schaltstellung III. befindet, sind die Anschlüsse 4a und 4c miteinander verbunden und der Anschluß 4b ist gesperrt. Dabei wird der Druck in der Radbremse 9 auf das im Druckspeicher 6 vorhandene Druckniveau aufgebaut.

Durch geeignete Ansteuerung des Proportionalventils 4 ist es möglich, zwischen den Schaltstellungen I., II. und III. so umzuschalten, daß jeder gewünschte Druckverlauf an der Radbremse 9 einstellbar ist. Damit erlaubt ein solches Konzept nicht nur die Umsetzung eines Bremswunsches des Fahrerzeugführers, sondern bei Vorhandensein entsprechender Sensoren, insbesondere der Sensoren 10 zur Erfassung des Raddrehzahlverhaltens, sind auch Antiblockierregelung, Antischlupfregelung, elektronische Bremskraftverteilung und fahrdynamische Regelungen durchführbar.

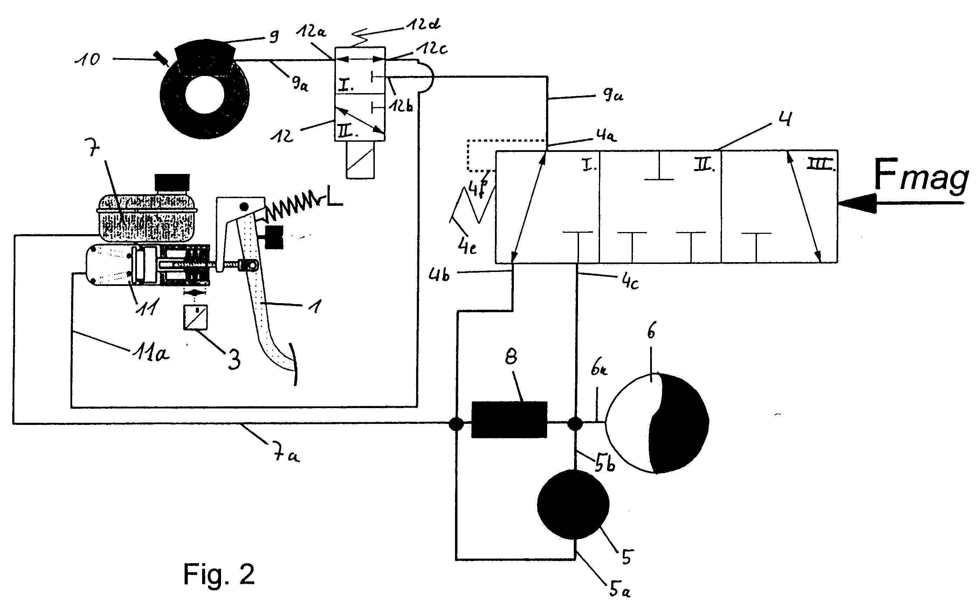

Das in Fig. 2 gezeigte elektrohydraulische Bremssystem ist gegenüber der in Fig. 1 dargestellten Anlage um eine "Push-Through"-Option erweitert. Dazu ist das Bremspedal 1 mit einem an das Reservoir 7 gekoppelten Bremsdruckgeber 11 mechanisch verbundene von dem ein Hilfsbremskreiseleitung 11a ausgeht.

In der Leitung 9a zwischen dem Anschluß 4a des Proportionalventils 4 und der Radbremse 9 ist ein elektromagnetisch betätigtes Umschaltventil 12 mit drei Anschlüssen 12a, 12b, 12c angeordnet. Der Anschluß 12a ist mit der Radbremse 9, der Anschluß 12b mit dem Anschluß 4a des Proportionalventils 4 und der Anschluß 12c ist über die Leitung 11a mit dem Bremsdruckgeber verbunden.

Im stromlosen Zustand nimmt das Umschaltventil 12 unter der Feder 12d seine (gezeigte) Grundstellung I. ein, in der die Anschlüsse 12a und 12c miteinander verbunden sind und der Anschluß 12b gesperrt ist, so daß die Radbremse 9 vom Bremsgeber 11 mit Druck beaufschlagt wird. In der Betätigungsstellung II. sind die Anschlüsse 12a und 12b miteinander verbunden und der Anschluß 12c ist gesperrt, so daß die Druckmodulation in der Radbremse 9 durch die elektrohydraulische Einheit bestehend aus Pumpe 5, Druckspeicher 6 sowie Proportionalventil 4 erfolgt.

Damit ist gewährleistet, daß die Radbremse 9 bei einem Ausfall der Versorgungsspannung stets über den Bremsdruckgeber 11 betätigbar ist. Es besteht auch die Möglichkeit bei Erkennung eines Fehlers im elektrohydraulischen Teil auf den Hilfsbremskreis 11a umzuschalten. Wenn die elektrische Versorgung des Umschaltventils in seiner betätigten Stellung ausfällt und das Zurückholen in die gezeigte Grundstellung aus irgendwelchen Gründen verhindert ist, kann jedoch weder direkt, d.h. über den Hilfsbremskreis 114, noch elektrohydraulisch gebremst werden.

Des weiteren weist das Ventil 4 eine Drucksteuerleitung 4f auf, so daß der Druck in der Radbremse 9 zusätzlich zur oder anstelle der Kraft der Feder 4e wirkt, um das Ventil 4 in seine gezeigte Grundstellung I. zu überführen und/oder dort zu halten.

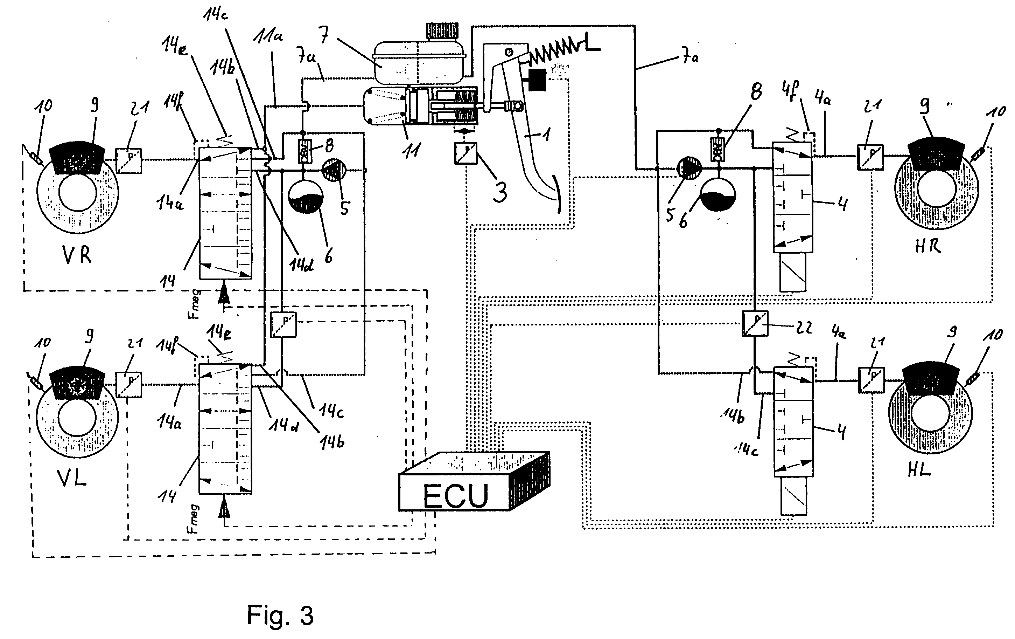

In Fig. 3 ist eine elektrohydraulische Bremsanlage gezeigt, bei der die Druckversorgung für die Bremsen 9 der Vorderräder VR, VL und die Bremsen 8 der Hinterräder HR, HL jeweils von einem über eine Pumpe 5 aufzuladenden Druckspeicher 6 bereitgestellt wird. Als Stellglieder zur Modulation des Bremsdruckes in den Bremsen 9 der Hinterachse HR, HL dienen jeweils Drei-Drei-Wege-Proportionalventile 4, wogegen für die Bremsen 9 der Vorderachse VR, VL die "Push-Through" fähigen Vier-Vier-Wege-Proportionalventile 14 eingesetzt werden, die an den Hilfsbremskreis 11a angeschlossen sind.

Der "Push-Through" kann hier auf die Bremsen 9 der vorderen Räder VR, VL erfolgen, da durch diese aufgrund der dynamischen Achslastverteilung bei einem Bremsvorgang der überwiegende Bremskraftanteil übertragen wird. Ebenso kann der "Push-Through" für die Radbremsen 9 der angetriebenen Fahrzeugachse ausgelegt werden. Bei Anwendung des "Push-Through" nur auf die Räder einer Achse VR, VL oder HR, HL kann der Bremsdruckgeber 11 zur Versorgung des Hilfskreises 11a einfacher ausgeführt werden, was sich günstig auf die Kosten und den Raumbedarf auswirkt.

Bei dem erfindungsgemäßen elektrohydraulischen Bremssystem gemäß Fig. 3 ist das Umschaltventil 12 aus Fig. 2 nicht erforderlich, da die "Push-Through"-Option in das Proportionalventil 14 integriert ist. Somit besteht eine direkte Verbindung 9a vom Anschluß 14a des Proportionalventils 14 zu der Radbremse 9. Für die "Push-Through"-Option verfügt das Proportionalventil 14 über eine weitere Schaltstellung IV. sowie einen weiteren Anschluß 14a, an den der Hilfsbremskreis 11a angeschlossen ist.

Die Schaltstellung IV. bildet hierbei die Grundstellung, in der das Ventil 14 im stromlosen Zustand unter Einwirkung der Feder 4e verharrt. In dieser Grundstellung IV. ist der Anschluß 14a direkt mit dem Anschluß 4a verbunden, so daß die Radbremse 9 an den Hilfsbremskreis 11a angeschlossen ist. Befindet sich das Ventil 4 dagegen in einer der Schaltstellungen I., II. und III. so ist der Anschluß 14a stets abgesperrt.

Dadurch ist sichergestellt, daß das Proportionalventil 14 bei Ausfall der Stromversorgung seine Grundstellung IV. einnimmt, in der eine Bremsenbetätigung durch den Bremsdruckgeber 11 erfolgt. Auch kann die Stromversorgung des Proportionalventils 14 bei Erkennung eines Fehlers im elektrohydraulischen Teil abgeschaltet werden, so daß automatisch auf die Stellung IV. umgeschaltet wird und eine Abbremsung vom Hilfsbremskreis 11a übernommen wird.

Zur weiteren Erhöhung der Sicherheit verfügt das Proportionalventil 14 über eine Drucksteuerleitung 14f, so daß der Druck in der Radbremse 9 additiv zur oder anstelle der Kraft der Feder 4e wirkt, um das Ventil 14 in seine Grundstellung IV. zu überführen und/oder dort zu halten. Durch diese als "Pressure-Feedback" bezeichnete Maßnahme wird erreicht, daß das Ventil 14 auch für den Fall eines Defekts der Feder 4e in der Lage ist seine "Push-Through"-fähige Grundstellung IV. einzunehmen.

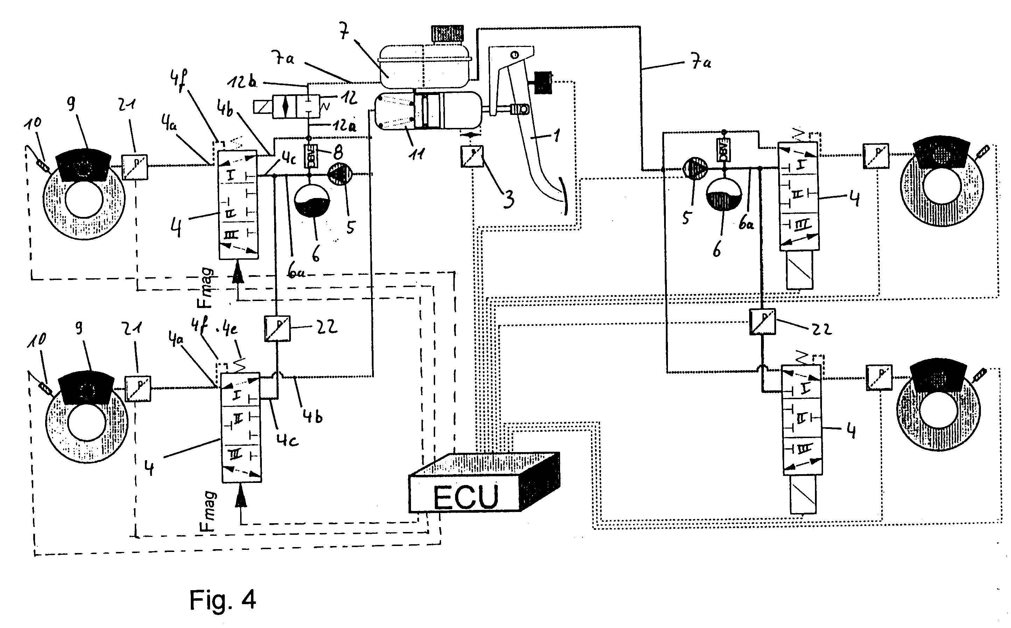

Bei der in Fig. 4 dargestellten elektrohydraulischen Bremsanlage sind auch die Bremsen 9 der Vorderräder VR, VL betätigbar, so daß der "Push-Through" auf alle Fahrzeugrädern VR, VL, HR, HL wirkt, was bei allradgetriebenen Fahrzeugen sinnvoll ist.

Gegenüber einer Anlage ohne "Push-Through" werden für diese Anlage nur der Hilfbremsdruckgeber 11 sowie ein zentral angeordnetes Umschaltventil 12 pro Bremskreis als zusätzliche Komponenten benötigt. Auch die den einzelnen Rädern zugeordneten Proportionalventile 4 können baugleich nach dem Drei-Drei-Wege-Prinzip operierend ausgeführt werden, so daß die "Push-Through"-Option insgesamt mit einem sehr geringen Aufwand realisiert ist.

Weiterhin ist bei den Bremsanlagen nach Fig. 3 und Fig. 4 eine elektronische Steuereinheit ECU dargestellt, die über einen Sensor 3 den Bremswunsch des Fahrers erfaßt, um diesen in Ansteuersignale für die Stellventile 4, 14 sowie die elektromotorisch betriebene Pumpen-Speicher-Einheit 5, 6 umzusetzen. Um den Bremsdruck in den Radbremsen 9 über die Stellglieder 4, 14 mit möglichst hoher Güte regeln zu können, sind an jeder Radbremse 9 Sensoren 21 vorhanden, die eine Rückmeldung über den aktuellen Bremsdruck liefern. Damit in den Speichern 6 stets ein ausreichendes Druckniveau zur Verfügung steht, wird auch der Druck an den Speicherausgängen 6a mittels Sensoren 22 überwacht, um den Nachladevorgang mittels der Pumpe 5 zu steuern. Die Erfassung des Raddrehzahlverhaltens durch Sensoren 10 dient dazu, in der elektronischen Steuereinheit ECU den Druck auf die Bremsen 9 in der Leitung 9a möglichst genau dosieren und modulieren zu können.

Bei der in Fig. 4 gezeigten Bremsanlage verfügt das Proportionalventil 4 über die drei Schaltstellungen I., II. und III. mit Stellung I. als Grundstellung gemäß den Ausführungsformen nach Fig. 1 und Fig. 2 . Dieses Proportionalventil 4 hat die gleiche Belegung der Anschlüsse 4a, 4b und 4c wie die Ausführungsform nach Fig. 1, so daß der Anschluß 4a direkt mit der Radbremse 9 verbunden ist.

Die "Push-Through"-Option erfordert hierbei ein elektromagnetisch gesteuertes Absperrventil 12, welches in der Verbindungsleitung 7a zwischen Reservoir 7 und Pumpeneingangsseite 5a bzw. Anschluß 4b des Proportionalventils 4 angeordnet ist. Dazu parallel ist der Hilfsbremskreis 11a angeordnet, der ebenso mit der Pumpeneingangsseite 5a bzw. dem Anschluß 4b des Proportionalventils 4 verbunden ist.

Das Absperrventil 12 besitzt zwei Schaltstellungen I. und II., die so ausgelegt sind, daß die Verbindung 7a im stromlosen Ruhezustand des Absperrventils 12 gesperrt und in dessen betätigtem Zustand geöffnet wird. Da sowohl das Proportionalventil 4 als auch das Absperrventil 12 bei einem Ausfall oder einer Abschaltung der Stromversorgung jeweils ihre Grundstellung I. einnehmen, ist die Radbremse 9 in diesem Fall über den Hilfsbremskreis 11a betätigbar.

Die in Fig. 4 dargestellte Bremsanlage ist anstelle eines Zwei-Zwei-Wege-Absperrventils 12 auch mittels eines Drei-Zwei-Wege-Umschaltventils ausführbar, welches die Pumpeneingangsseite 5a bzw. den Anschluß 4b des Proportionalventils 4 entweder mit dem Hilfsbremskreis 11a oder mit dem Reservoirausgang 7a verbindet, wobei die Verbindung zum Hilfsbremskreis 11a als stromlose Ruhestellung ausgelegt ist.

Um die für die in Fig. 3 und 4 gezeigten Bremsanlage bei ordnungsgemäßem Zustand des elektrohydraulischen Bremssystems erforderliche elektrische Energieaufnahme der Umschalteinrichtungen 12, 13 und 14 zu reduzieren, ist es zweckmäßig, deren Betätigung zur Deaktivierung des "Push-Through" immer nur dann vorzunehmen, wenn der Fahrer den Fuß vom Gaspedal nimmt, um die Bremsbereitschaft des elektrohydraulischen Systems herzustellen. Für den hierzu erforderlichen Auswertevorgang ist beispielsweise die in der Motorsteuerung des Fahrzeugs vorliegende Information über die Drosselklappenposition heranzuziehen. Im Hinblick auf Bremseingriffe, die auch bei einem betätigtem Gaspedal durchzuführen sind, wie Antischlupfregelung und Fahrdynamikregelung, sind insbesondere die erfindungsgemäßen Ausführungsformen nach Fig. 3 und Fig. 4 geeignet, da durch Wegfall der Umschalteinrichtung 12 zur Deaktivierung des "Push-Through" zwischen Proportionalventil 4 und Radbremse 9 eine durch Schaltzeiten bedingte Zeitverzögerung bei der ersten Druckaufbauphase nicht stattfindet. Die Deaktivierung des "Push-Through" erfolgt bei Fig. 3 unmittelbar mit der Einleitung des Bremsvorganges über die Ventileinrichtung 14. Bei Fig. 4 ist zur Deaktivierung des "Push-Through" zwar die Betätigung des zusätzlichen Ventils 12 erforderlich, aber unter der Vorrausetzung eines zu Beginn der Bremsung ausreichend aufgeladenen Druckspeichers 6 ist auch hier ein durch Schaltzeiten bedingter zeitlich verzögerter Druckaufbau ausgeschlossen.

Durch Entfall der zur Betätigung einer zusätzlichen Umschalteinrichtung 12 erforderlichen Schaltsignale wird die Systemsicherheit insbesondere bei der Ausführung entsprechend Fig. 3 erhöht, da die Auftrittswahrscheinlichkeit von Schaltfehlern, die unter anderem durch äußere Störeinstrahlung entstehen können, erheblich verringert ist.

## Patentansprüche

1. Elektrohydraulische Bremsanlage für Kraftfahrzeuge, mit
- einem durch ein Bremspedal (1) betätigbaren Bremszylinder (11) und einem drucklosen Reservoir (7) für Hydraulikfluid,
- einer mit einem Fahrzeugrad gekoppelten Bremseinrichtung (9), die mit dem Bremszylinder (11) in Verbindung bringbar ist, um die Bremseinrichtung (9) mit unter Druck stehendem Hydraulikfluid zu beaufschlagen,
- einer unter Druck stehendes Hydraulikfluid liefernden Quelle (5,6) die mit der Bremseinrichtung (9) in Verbindung bringbar ist, um die Bremseinrichtung (9) mit unter Druck stehendem Hydraulikfluid zu beaufschlagen, und
- einer elektronischen Steuereinrichtung (ECU), die mit einem Sensor (3) zur Erfassung von an dem Bremspedal (1) auftretenden statischen und dynamischen Zuständen verbunden ist und von dem Sensor (3) abgegebene Signale zur Erzeugung von Steuersignalen für eine Steuerventilanordnung (4, 12; 14) heranzieht, wobei
- die Steuerventilanordnung (4, 12; 14) dazu eingerichtet ist,
-- in einer ersten Stellung die Bremseinrichtung (9) mit dem drucklosen Reservoir (7) für Hydraulikfluid zu verbinden,
-- in einer zweiten Stellung die Bremseinrichtung (9) gegenüber dem drucklosen Reservoir (7) für Hydraulikfluid, dem Bremszylinder (11) und der unter Druck stehendes Hydraulikfluid liefernden Quelle (5, 6) zu sperren,
-- in einer dritten Stellung die Bremseinrichtung (9) mit der unter Druck stehendes Hydraulikfluid liefernden Quelle (5, 6) zu verbinden, und
-- in einer vierten Stellung die Bremseinrichtung (9) mit dem Bremszylinder (11) zu verbinden,
dadurch gekennzeichnet, daß
- die Steuerventilanordnung durch ein elektrisch betätigbares Ventil (14) mit vier Anschlüssen (14a, 14b, 14c, 14d) und vier Ventilstellungen (I, II, III, IV) gebildet ist, wobei eine der vier Ventilstellungen (IV) eine unbetätigte Stellung ist und das Ventil (14) in die drei anderen Stellungen durch Steuersignale von der elektronischen Steuereinrichtung (ECU) bringbar ist.

2. Elektrohydraulische Bremsanlage für Kraftfahrzeuge nach Anspruch 1, dadurch gekennzeichnet, daß
- ein erster Anschluß (14a) des Ventils (14) mit der Bremseinrichtung (9),
- ein zweiter Anschluß (14b) des Ventils (14) mit dem Bremszylinder (11),
- ein dritter Anschluß (14c) des Ventils (14) mit dem drucklosen Reservoir (7) für Hydraulikfluid, und
- ein vierter Anschluß (14d) des Ventils (14) mit der unter Druck stehendes Hydraulikfluid liefernden Quelle (5, 6) verbunden sind (Fig. 3).

3. Elektrohydraulische Bremsanlage für Kraftfahrzeuge nach Anspruch 1 oder 2, dadurch gekennzeichnet, daß
- das Ventil (14,4) einen Drucksteuereingang (14f,4f) aufweist, der mit dem ersten Anschluß (14a,4a) des Ventils (14,4) verbunden ist, um das Ventil (14,4) in seine unbetätigte Stellung zu bringen.

4. Elektrohydraulische Bremsanlage für Kraftfahrzeuge nach Anspruch 1 oder 2, dadurch gekennzeichnet, daß
- das Ventil (14,4) einen Drucksteuereingang (14f,4f) aufweist, der mit dem zweiten Anschluß (14b,4b) des Ventils (14,4) verbunden ist, um das Ventil (14,4) in seine unbetätigte Stellung zu bringen.

## Claims

1. An electrohydraulic braking system for motor vehicles, comprising
- a brake cylinder (11) which can be actuated by a brake pedal (1) and a pressureless reservoir (7) for hydraulic fluid;
- a brake means (9) which is coupled with a vehicle wheel and which can be connected with the brake cylinder (11) in order to subject the brake means (9) with pressurized hydraulic fluid;
- a source (5, 6) which supplies pressurized hydraulic fluid and which can be brought in connection with the brake means (9) in order to subject the brake means (9) with pressurized hydraulic fluid pump (110), and
- an electronic control unit (ECU) which is connected with a sensor (3) for sensing the static and dynamic conditions occurring at the brake pedal (1) and which utilizes the signals output by the sensor (3) for the generation of control signals for a control valve arrangement (4, 12; 14), with
- the control valve arrangement (4, 12; 14) being adapted to
-- connect the brake means (9) with the pressureless reservoir (7) for hydraulic fluid in a first position,
-- block the brake means (9) against the pressureless reservoir (7) for hydraulic fluid, the brake cylinder (11), and the source (5, 6) supplying pressurized hydraulic fluid in a second position,
-- connect the brake means (9) with the source (5, 6) supplying pressurized hydraulic fluid in a third position, and
-- connect the brake means (9) with the brake cylinder (11) in a fourth position,
characterised in that
- the control valve arrangement is formed by an electrically operatable valve (14) with four connections (14a, 14b, 14c, 14d) and four valve positions (I, II, III, IV), with one of the four valve positions (IV) being a non-actuated position, and the valve (14) can be brought into the three other positions by control signals from the electronic control unit (ECU).

2. The electrohydraulic braking system for motor vehicles according to Claim 1, characterised in that
- a first connection (14a) of the valve (14) is connected with the brake means (9),
- a second connection (14b) of the valve (14) is connected with the brake cylinder (11),
- a third connection (14c) of the valve (14) is connected with the pressureless reservoir (7) for hydraulic fluid, and
- a fourth connection (14d) of the valve (14) is connected with the source (5, 6) supplying pressurized hydraulic fluid.

3. The electrohydraulic braking system for motor vehicles according to Claim 1 or 2, characterised in that
- the valve (14, 4) comprises a pressure control input (14f, 4f) which is connected with the first connection (14a, 4a) of the valve (14, 4) in order to bring the valve (14, 4) into its non-actuated position.

4. The electrohydraulic braking system for motor vehicles according to Claim 1 or 2, characterised in that
- the valve (14, 4) comprises a pressure control input (14f, 4f) which is connected with the second connection (14b, 4b) of the valve (14, 4) in order to bring the valve (14, 4) into its non-actuated position.

## Revendications

1. Système de freinage électrohydraulique pour véhicules automobiles, comprenant
- un cylindre de frein (11) pouvant être actionné par une pédale de frein (1) et un réservoir sans pression (7) pour du fluide hydraulique,
- un dispositif de freinage (9) accouplé à une roue de véhicule, qui peut être mis en communication avec le cylindre de frein (11) pour alimenter en fluide hydraulique sous pression le dispositif de freinage (9),
- une source (5, 6) délivrant du fluide hydraulique sous pression qui peut être mise en communication avec le dispositif de freinage (9) pour alimenter le dispositif de freinage (9) avec du fluide hydraulique sous pression, et
- une unité de commande électronique (ECU) qui est reliée a un capteur (3) pour relever des états statiques et dynamiques apparaissant à la pédale de frein (1) et exploite des signaux délivrés par le capteur (3) pour générer des signaux de commande pour un moyen de vanne de régulation (4, 12; 14), dans lequel
- le moyen de vanne de régulation (4, 12; 14) est conçu pour
-- mettre en communication dans une première position le dispositif de freinage (9) avec le réservoir sans pression (7) pour fluide hydraulique,
-- couper dans une deuxième position le dispositif de freinage (9) du réservoir sans pression (7) pour fluide hydraulique, du cylindre de frein (11) et de la source (5, 6) délivrant du fluide hydraulique sous pression,
-- mettre en communication dans une troisième position le dispositif de freinage (9) avec la source (5, 6) délivrant du fluide hydraulique sous pression, et
-- mettre en communication dans une quatrième position le dispositif de freinage (9) avec le cylindre de frein (11),
caractérisé en ce que
- le moyen de vanne de régulation est formé d'une vanne (14) pouvant être actionnée électriquement comprenant quatre raccords (14a, 14b, 14c, 14d) et quatre positions de vanne (I, II, III, IV), une (IV) des quatre positions de vanne étant une position de repos et la vanne (14) pouvant être amenée dans les trois autres positions par des signaux de commande provenant du dispositif de commande électronique (ECU).

2. Système de freinage électrohydraulique pour véhicules automobiles selon la revendication 1, caractérisé en ce que
- un premier raccord (14a) de la vanne (14) est relié au dispositif de freinage (9),
- un deuxième raccord (14b) de la vanne (14) est relié au cylindre de frein (11),
- un troisième raccord (14c) de la vanne (14) est relié au réservoir sans pression (7) pour fluide hydraulique,
- un quatrième raccord (14d) de la vanne (14) est relié a la source (5, 6) délivrant du fluide hydraulique sous pression (Fig. 3).

3. Système de freinage électrohydraulique pour véhicules automobiles selon la revendication 1 ou 2, caractérisé en ce que
- la vanne (14, 4) présente une entrée de commande de pression (14f, 4f) qui est reliée au premier raccord (14a, 4a) de la vanne (14, 4) pour amener la vanne (14, 4) dans sa position de repos.

4. Système de freinage électrohydraulique pour véhicules automobiles selon la revendication 1 ou 2, caractérisé en ce que
- la vanne (14, 4) présente une entrée de commande de pression (14f, 4f) qui est reliée au deuxième raccord (14b, 4b) de la vanne (14, 4) pour amener la vanne (14, 4) dans sa position de repos.
